# EUROPEAN PATENT APPLICATION

(11) **EP 2 254 305 A1**
(43) Date of publication of application: **24.11.2010**
(21) Application number: 10176421.5
(22) Date of filing: 02.09.2005
(51) Int. Cl.: H04L 29/06

(54) **Method and apparatus for pseudo-secret key generation to generate a response to a challenge received from service provider**

(30) Priority: 02.09.2004 US 606971 P; 06.01.2005 US 31374
(62) Divisional of application: 05796375.3
(71) Applicant: Qualcomm Incorporated, San Diego, CA 92121-1714 (US)
(72) Inventor: Rose, Gregory Gordon, San Diego, 92121-1714 (US); Quick, Roy Franklin, San Diego, CA, 92121-1714 (US); Nasielski, John Wallace, San Diego, 92121-1714 (US); Semple, James, San Diego, 92121-1714 (US)
(74) Representative: Bardehle, Heinz

(57) **Abstract**

A subscriber station (110, 112) may be configured with a processing system having first and second security protocols (210, f2). The processing system uses the first security protocol (210) to generate a pseudo-secret key from a challenge received from a service provider, and uses the second security protocol (f2) to generate a response to the challenge from the pseudo-secret key.

## Description

### CROSS-REFERENCE TO RELATED APPLICATION

This application claims priority to U.S. Provisional Patent Application Serial No. 60/606,971, filed September 2, 2004, which is incorporated herein by reference in its entirety.

### BACKGROUND

### FIELD

The present disclosure relates generally to wireless telecommunications, and more specifically, to security in wireless telecommunications.

As wireless devices become more powerful, capable of running applications that communicate with arbitrary application servers, there is a need for such communications to be authenticated and secured. This, in turn, requires that the wireless device and the application server come to share a secret key that is given only to them, and this key is distributed by a third party that is already authenticated and trusted by both the wireless device and the application server. The network operators for the wireless device are in a good position to do this. The Third Generation Partnership Project (3GPP) is in the process of standardizing a mechanism to do this, based on their Authentication Key Agreement (AKA) protocol. The 3GPP is a collaboration agreement that brings together a number of telecommunications standards for the purpose of developing global specifications for the Global System for Mobile Communications (GSM). The 3GPP was pioneered by the European Telecommunications Standard Institute (ETSI).

The Third Generation Partnership 2 (3GPP2) is also a collaboration agreement representing North America and Asian interests. It was established to develop global specifications for ANSI/TIA/EIA-41 networks supporting analog, Time Division Multiple Access (TDMA), and Code Division Multiple Access (CDMA). While the 3GPP2 has officially adopted AKA, there has been some resistance to deploying AKA, and in some instances, an effort to promote the continued use of the Cellular Authentication and Voice Encryption (CAVE) legacy protocol, despite known weaknesses in CAVE. Probably, the biggest single problem with CAVE is that its master key is only 64-bits. This is not considered adequate security for current and future applications. At the same time, there are backward compatibility issues with the deployment of AKA, particularly when the wireless device incorporates a User Identity Module (UIM) supporting the CAVE algorithm. The UIM contains the authentication credentials and algorithms that use them.

Accordingly, there is a need in the art for technology that provides greater security in legacy devices employing CAVE. Preferably, this technology should be cryptographically proven, such as AKA.

### SUMMARY

In one aspect of the present invention, a subscriber station includes a processing system having first and second security protocols, the processing system being configured to use the first security protocol to generate a pseudo-secret key from a challenge received from a service provider, and use the second security protocol to generate a response to the challenge from the pseudo-secret key.

In another aspect of the present invention, a method secured communications includes receiving a challenge from a service provider, using a first security protocol to generate a pseudo-secret key from the challenge, and using a second security protocol to generate a response to the challenge from the pseudo-secret key.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the spirit and scope of the present invention. Accordingly, the drawings and detailed description are to be regarded as illustrative in nature and not as restrictive.

### BRIEF DESCRIPTION OF DRAWINGS

Aspects of the present invention are illustrated by way of example, and not by way of limitation, in the accompanying drawings, wherein:

FIG. 1 is a conceptual block diagram illustrating an example of a telecommunications system;

FIG. 2 is a functional block diagram illustrating an example of a standardized CAVE algorithm to support communications over a telecommunications system;

FIG. 3 is a functional block diagram illustrating an example of an Authentication Center generating a pseudo-secret key using a CAVE algorithm;

FIG. 4 is a functional block diagram illustrating an example of an Authentication Center using a pseudo-secret key to generate an authentication vector;

FIG. 5 is a functional block diagram illustrating an example of a challenge/response transaction between a subscriber station and a Mobile Switching Center; and

FIG. 6 illustrates an example method for secured communications.

### DETAILED DESCRIPTION

The detailed description set forth below in connection with the appended drawings is intended as a description of various embodiments of the present invention and is not intended to represent the only embodiments in which the present invention may be practiced. The detailed description includes specific details for the purpose of providing a thorough understanding of the present invention. However, it will be apparent to those skilled in the art that the present invention may be practiced without these specific details. In some instances, well known structures and components are shown in block diagram form in order to avoid obscuring the concepts of the present invention.

In the following detailed description, various encryption mechanisms will be described in connection with a CDMA telecommunications system. CDMA is a modulation and multiple access scheme based on spread-spectrum communications and is well known in the art. While the encryption mechanisms described throughout this disclosure may be well suited for use in a CDMA telecommunications system, those skilled in the art will readily appreciate that these techniques are likewise applicable to other wireless networks. Accordingly, any reference to a CDMA telecommunications system is intended only to illustrate various inventive aspects of the present invention, with the understanding that these inventive aspects have a wide range of applications.

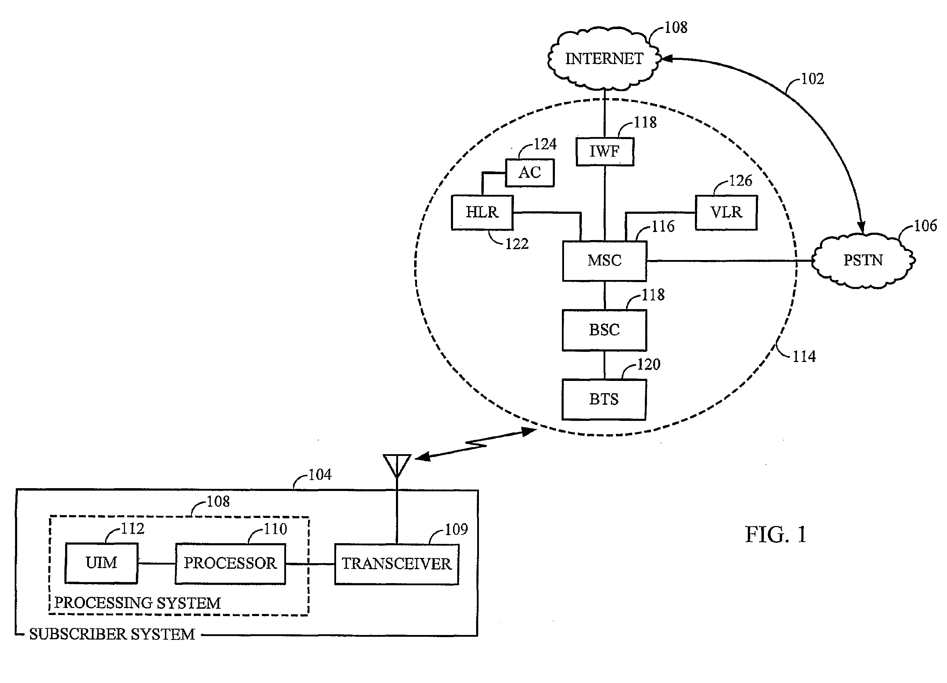

FIG. 1 is a conceptual block diagram illustrating an example of a telecommunications system. In this system, a user may communicate with a wired subsystem 102 on a subscriber station 104. The wired subsystem 102 may include a circuit-switched network 106, such as the Public Switched Telephone Network (PSTN), and/or a packet-switched network 108, such as the Internet or a corporate intranet. The subscriber station may be a phone, personal digital assistant (PDA), a laptop, a computer, a game console, a pager, a camera, instrumentation, or any other type of mobile terminal.

The subscriber station 104 may include a transceiver 109 to support radio communications with a wireless subsystem 114. A processing system 108 may be used to provide various signal processing functions. The processing system 108 may include a processor 110 integrated into the subscriber station 104, and a UIM 112 with its own processor (not shown). The UIM 112 may or may not be removable from the subscriber station 104. A removable UIM is often referred to in the art as a R-UIM. In either case, the UIM 112 is generally designed to be tamper-resistant and capable of a reasonable level of protection for encryption keys.

The wireless subsystem 114 may be used to support communication between the subscriber station 104 and the circuit-switched and/or packet switched networks 106, 108. A Mobile Switching Center (MSC) 116 is shown as the service provider in this example, providing access to the circuit-switch network 106 and/or the packet-switched network 108 via an Interworking Function (IWF) 118. However, as those skilled in the art will appreciate, any service provider may be used to interface the subscriber station 104 to the wired subsystem 102. Accordingly, all authentication and encryption procedures described throughout this disclosure with reference to the MSC 116 are equally applicable to any service provider in the wireless subsystem 114.

The wireless subsystem also includes a Base Station Controller (BSC) 118, which controls one or more Base Station Transceivers (BTS) through the allocation and management of radio resources. Each BTS includes one or more transceivers placed at a single location to provide radio coverage throughout the entire wireless subsystem 114. For simplicity, a single BTS 120 is shown in communication with the subscriber station 104.

The wireless subsystem 114 may also include a Home Location Register (HLR) 122. The HLR 122 may be used to maintain a record of valid subscribers for various service providers. The HLR 122 also maintains all subscriber information, such as the Electronic Serial Number (ESN), the phone number of the subscriber station, the current location of the subscriber station, etc.. The HLR 122 may be co-located with the MSC 116, be an integral part of the MSC 116, or be independent of the MSC 116. One HLR can serve multiple MSCs, or an HLR may be distributed over multiple locations. Typically, the HLR 122 will be coupled with an Authentication Center (AC) 124.

A Visitor Location Register (VLR) 126 is normally coupled with the MSC 116. The VLR 126 maintains a register of visiting subscriber stations operating within the coverage area of the BTSs connected to the MSC 116. The VLR 126 serves as a local cache of HLR subscriber information for quick and easy access. When a roaming subscriber station 104 enters a new service area covered by the MSC 116, the MSC 116 retrieves the subscriber station information from the HLR 122 and places it into the VLR 126.

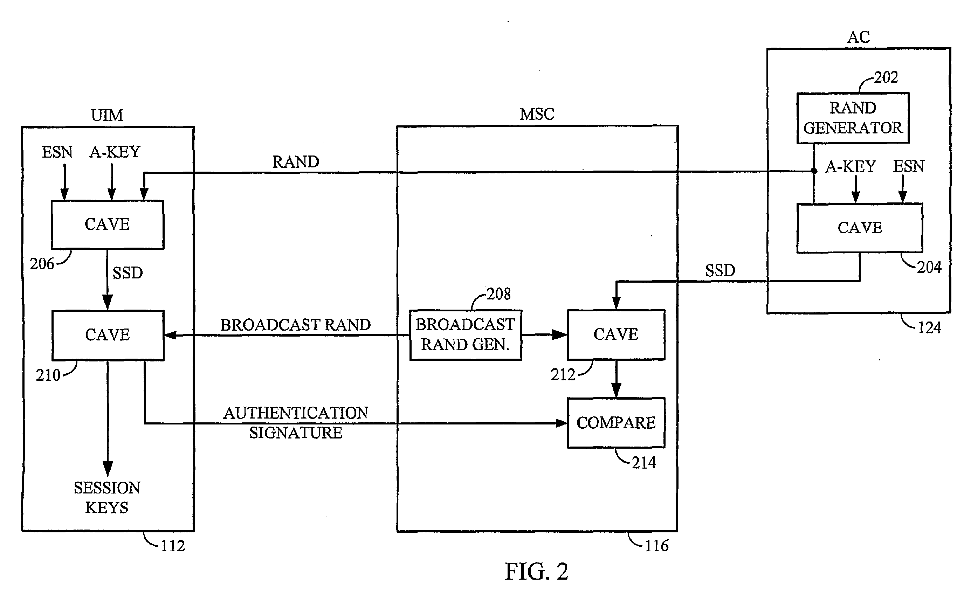

FIG. 2 is a functional block diagram illustrating an example of a standardized CAVE algorithm to support communications over the wireless subsystem. The security protocols rely on a 64-bit secret key (A-Key) and the ESN of the subscriber station 104. A random binary number called RAND, which is generated in the AC 124, also plays a role in the authentication procedures. The A-Key is programmed into the UIM 112 in the subscriber station 104 and is stored in the AC 124. In addition to authentication, the A-Key is used to generate session keys for voice and data encryption.

When the subscriber station 104 initially registers with the wireless subsystem, the authentication process begins with the generation of a 128-bit secondary key called the "Shared Secret Data" (SSD) at the AC 124 and the subscriber station. At the AC 124, a RAND generator 202 is used to generate a RAND which, along with the A-key and the subscriber station's ESN, are input to a CAVE algorithm 204 to generate the SSD. The RAND is also sent to the UIM 112 so that the SSD can be generated at the subscriber station 104. At the UIM 112, the RAND, the A-key, and the ESN are input to a similar CAVE algorithm 206 to generate the SSD.

The SSD is provided from the AC 124 to the MSC 116 serving the area in which the subscriber station 104 resides. The SSD may be shared with MSC's in other service areas to allow local authentication of a roaming subscriber station 104. The SSD may be used by the MSC 116 to support a challenge/response authentication procedure. In particular, the MSC 116 generates a random challenge (Broadcast RAND) with a Broadcast RAND generator 208. The Broadcast RAND is provided to the UIM 112 in the subscriber station 104. The UIM 112 uses the Broadcast RAND and the SSD as input to a CAVE algorithm 210 to generate an authentication signature, i.e., a response to the challenge. This signature is then used by the MSC 116 to authenticate the subscriber station 104 by comparing 214 the signature to the output of a similar CAVE algorithm 212 applied to the Broadcast RAND and the SSD from the AC 124.

In at least one embodiment of the CDMA telecommunications system of FIG. 1, secure communications may be realized with an AKA protocol using the CAVE credentials in the UIM 112. The AKA protocol provides enhanced security over CAVE. At the same time, the use of the CAVE credentials provides backward compatibility with the legacy equipment currently deployed in the field.

The AKA procedure is performed in two stages. The first stage involves the transfer of security credentials from the AC 124 to either the MSC 116 or some other service provider in the wireless subsystem responsible for setting up the connections with the subscriber station 104. The security credentials consist of an ordered array of authentication vectors (AV). The authentication vectors AV include challenge/response authentication data and cryptographic keys. The second stage involves a one-pass challenge/response transaction between the subscriber station 104 and the MSC 116 to achieve mutual authentication.

In the standardized AKA protocol, the authentication vectors AV are derived by the AC 124 from a 128-bit secret key (K) known only by the AC 124 and the UIM 112. However, in the described embodiment, the UIM 112 employs CAVE security credentials, and therefore, does not have a secret AKA key K. Accordingly, a pseudo-secret key (PK) is used. The pseudo-secret key (PK) may be created from information provided by the UIM 112 to the processor 110 (see FIG. 1). By way of example, the pseudo-secret key PK may be created from one of the session keys generated by the CAVE algorithm 210 in the UIM 112. Any session key may be used, but it is believed that the Signaling Message Encryption key (SMEKEY) is a good choice because it is more difficult to recover by an eavesdropper.

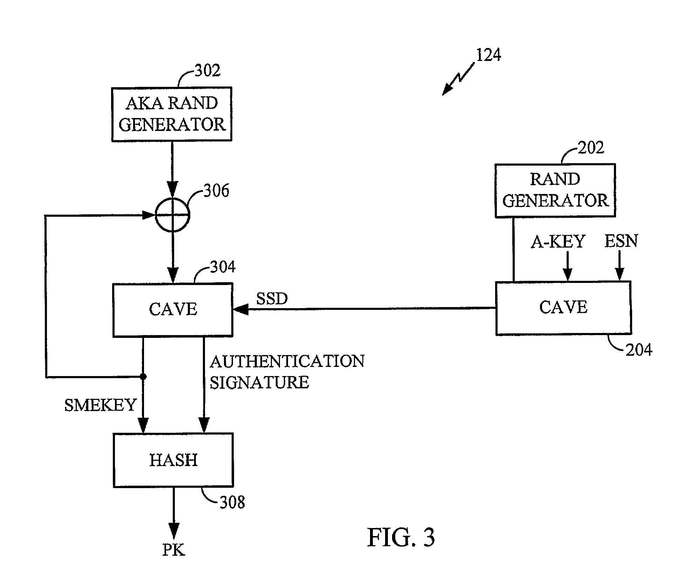

The manner in which the pseudo-secret key PK is created may vary depending on the specific design constraints and the overall system parameters. FIG. 3 is a functional block diagram illustrating one example of how the pseudo-secret key PK may be derived in the AC 124. The generation of the pseudo-secret key (PK) begins with the creation of a 128-bit AKA RAND for the authentication vector (AV). The 128-bit AKA RAND may be generated from a AKA RAND generator 302. The first 32-bits of the AKA RAND may be used as a CAVE challenge. In particular, the first 32-bits of the AKA RAND, along with the SSD, may be input to a CAVE algorithm 304 to generate an authentication signature (RES1) and a SMEKEY (SMEKEY1). The SMEKEY may be combined with the second 32-bits of the AKA RAND using an XOR function 306 to be used as the second CAVE challenge. The second CAVE challenge produces a second authentication signature (RES2) and a second SMEKEY (SMEKEY2). This process may be repeated any number of times to produce any number of signatures and SMEKEYs. A hash function 308 may then be used to combine the signatures and SMEKEYs to form the pseudo-secret key PK.

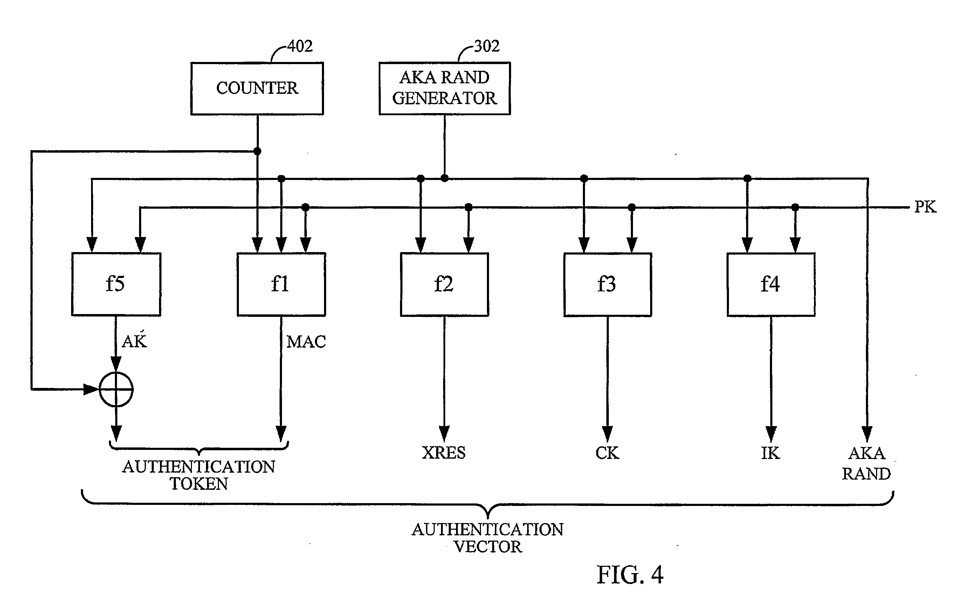

FIG. 4 is a functional block diagram illustrating an example of an AC that uses a pseudo-secret key PK to generate authentication vectors AV to support an AKA protocol. Each authentication vector AV includes a random challenge, i.e., an AKA RAND from the AKA RAND generator 302, an expected response (XRES), a cipher key (CI), an integrity key (IK), and an authentication token (AUTN). The authentication token AUTN includes a message authentication code (MAC) and an encrypted sequence number SQN. The sequence number SQN is produced by a counter 402 that is increased by one for each subsequent authentication vector AV generated by the AC 124. As will be described in greater detail shortly, the MAC is used by the subscriber station 104 to authenticate the MSC 116, or any other service provider, and the SQN is used to ensure that the authentication vector AV is not being replayed by an attacker.

The AC 124 uses a number of cryptographic functions to generate the authentication vectors AV. These functions may include f1-f5, f11, and other cryptographic function as defined by the appropriate standards and well known in the art. The network operators are generally free to choose any algorithm they want provided it complies with the function input/output specifications set forth in 3G TS 33.105, 3G Security; Cryptographic Algorithm Requirements. The first cryptographic function f0 is used to derive the MAC from the pseudo-secret key PK and the sequence number SQN. The remaining cryptographic functions f1-f5 are used to derive the expected response to the challenge XRES, the cipher key CK, the integrity key IK, and an anonymity key (AK), respectively, from the pseudo-secret PK and the AKA RAND. The anonymity key AK is used to encrypt the sequence number SQN in the authentication token AUTN.

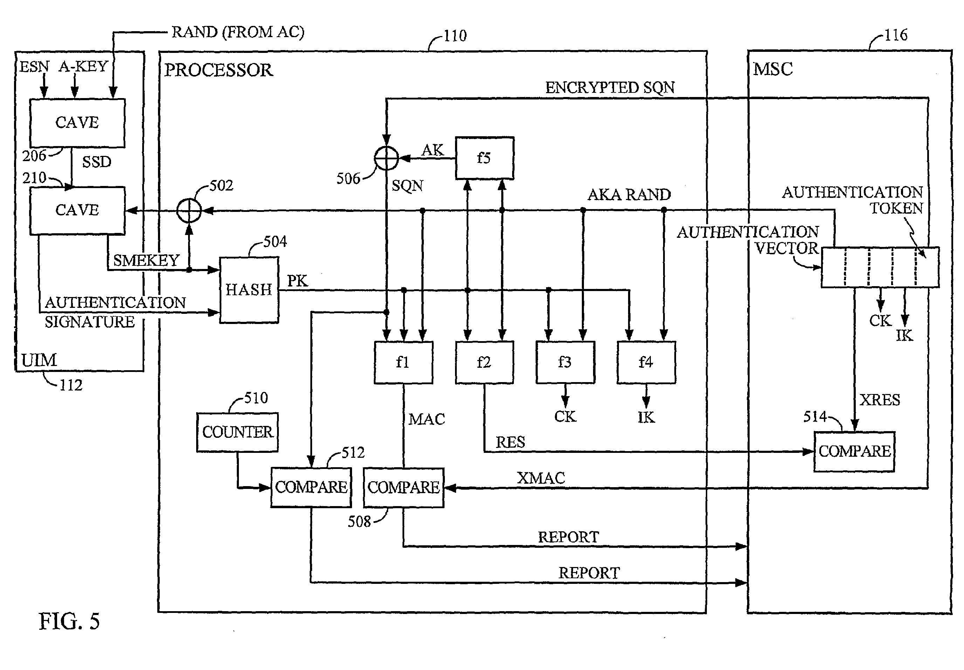

FIG. 5 is a functional block diagram illustrating an example of a challenge/response transaction between the subscriber station 104 and the MSC 116. The MSC 116 selects the next authentication vector (AV) from the ordered array and sends the AKA RAND and the authentication token AUTN to the subscriber station 104. At the processor 110, the pseudo-secret key PK must be generated in the same manner it was generated at the AC 124. In this example, the processor 110 provides the first 32-bits of the AKA RAND from the authentication vector AV to the UIM 112 as the CAVE challenge. The UIM 112 has a CAVE algorithm 502 that produces an authentication signature and a SMEKEY from the CAVE challenge and the SSD. The process may be repeated with the resulting SMEKEY at the end of each operation being combined with a portion of the AKA RAND through an XOR function 504 to form the CAVE challenge for the next operation. The process is repeated the same number of times as it is done in the AC 124 to produce the same number of authentication signatures and SMEKEYs. The authentication signatures and SMEKEYs are combined with a hash algorithm 506 to produce the pseudo-secret key PK.

Once the pseudo-secret key PK is derived by the processor 110, it may be used with the AKA protocol. The pseudo-random key PK may be used, along with the AKA RAND from the authentication vector AV, to derive the anonymity key (AK) using the f5 function. The sequence number SQN from the authentication token AUTN can then be decrypted with the anonymity key AK through an XOR operation 506. The decrypted sequence number SQN, along with the pseudo-secret key PK, may then be used to derive the expected message authentication code (XMAC) using the f1. The MAC from the authentication token AUTN and the XMAC may then be input to a comparator 508. If they are different, the processor 110 sends an error message back to the MSC 116 and abandons the authentication procedure.

The next step in the process, assuming that the MAC and the XMAC are the same, is to verify that the decrypted sequence number SQN is correct. The decrypted sequence number SQN and a locally generated SQN from a counter 510 may be input to a comparator 512. If the decrypted sequence number SQN is incorrect, the processor 110 sends an error message back to the MSC 124. In response to the error message, the MSC 116 may initiate a resynchronization process between the counters in the AC 124 and the processor 110.

Assuming that the MAC and XMAC are the same, and the decrypted sequence number SQN is correct, the session keys may then be generated. In particular, the cipher key CK and the integrity key IK may be derived from the AKA RAND and the pseudo-secret key PK using the f3 and f4 functions. The processor 110 also generates a response (RES) to the AKA RAND and the pseudo-secret key PK using the f2 function. The response RES is sent to the MSC 116. The MSC compares 514 the response RES from the processor 110 with the expected response XRES contained in the authentication vector AV. If the RES equals the XRES, then the subscriber station has been authenticated. The MSC 116 may select the appropriate cipher key CI and integrity key IK from the selected authentication vector AV to begin secured communications. If, however, the RES is different from the XRES, the MSC 116 may send an error message back to the AC 124. The MSC 116 may also decide to initiate a new authentication procedure with the subscriber station 104.

Enhanced security may be achieved by using a standard Diffie-Hellman key agreement protocol between the subscriber station 104 and the MSC 116 to negotiate a 128-bit temporary key (TK). The temporary key (TK) may then be provided by the MSC 116 to the AC 124. The temporary key (TK) may then be included in the hash function at both the AC 124 and processor 110 to derive the pseudo-secret key PK.

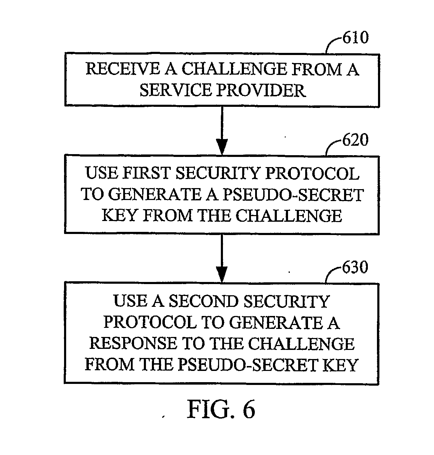

FIG. 6 shows an example method for secured communications. In step 610, a challenge is received from a service provider. A first security protocol is then used to generate (620) a pseudo-secret key from the challenge. A second security protocol is used to generate (630) a response to the challenge from the pseudo-secret key.

The various illustrative logical blocks, modules, circuits, elements, and/or components described in connection with the embodiments disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a plurality of microprocessors, one or more microprocessors in conjunction with a DSP core, or any other such configuration.

The methods or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein, but is to be accorded the full scope consistent with the claims, wherein reference to an element in the singular is not intended to mean "one and only one" unless specifically so stated, but rather "one or more." All structural and functional equivalents to the elements of the various embodiments described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."
In the following, further examples are described to facilitate the understanding of the invention:
1. A subscriber station, comprising:
   a processing system having first and second security protocols, the processing system being configured to use the first security protocol to generate a pseudo-secret key from a challenge received from a service provider, and use the second security protocol to generate a response to the challenge from the pseudo-secret key.
2. The subscriber station of claim 1 wherein the processing system is further configured to negotiate a temporary key with the service provider, and use the second security protocol to generate the response to the challenge from the pseudo-secret key and the temporary key.
3. The subscriber station of claim 2 wherein processor is further configured to negotiate the temporary key using a Diffie-Hellman key agreement protocol.
4. The subscriber station of claim 1 wherein the processing system is further configured to use the second protocol to authenticate the service provider from the challenge, the pseudo-secret key, and a token received from the service provider.
5. The subscriber station of claim 1 wherein the processing system is further configured to generate the pseudo-secret key from a preprogrammed secret key.
6. The subscriber station of claim 5 wherein the secret key is 64-bits and the pseudo-secret key is 128-bits.
7. The subscriber station of claim 5 wherein the processing system comprises a User Identity Module (UIM) preprogrammed with the secret key, and a communications processor, the UIM being configured to generate the pseudo-secret key, and the communications processor being configured to generate the response to the challenge.
8. The subscriber station of claim 7 wherein the communications processor is further configured to use the second security protocol to generate at least one session key from the challenge and the pseudo-secret key.
9. The subscriber station of claim 8 wherein the communications processor is further configured to encrypt and decrypt communications with the service provider using said at least one session key.
10. The subscriber station of claim 1 wherein the first security protocol comprises Cellular Authentication and Voice Encryption (CAVE), and the second security protocol comprises Authentication and Key Agreement (AKA).
11. The subscriber station of claim 10 wherein the processing system is further configured to negotiate a temporary key with the service provider using a Diffie-Hellman key agreement protocol, and use the AKA to generate the response to the challenge from the pseudo-secret key and the temporary key.
12. The subscriber station of claim 1 wherein the processing system is further configured to use the first security protocol to generate a session key from the challenge received from the network, the pseudo-secret key being generated from the session key.
13. The subscriber station of claim 12 wherein the session key comprises a key for encrypting signaling in accordance with the first security protocol.
14. The subscriber station of claim 12 wherein the processing system is further configured to use the first security protocol to generate a second session key from the session key and the challenge, the pseudo-secret being generated from at least the two session keys.
15. The subscriber station of claim 14 wherein the processing system is further configured to generate the pseudo-secret key from a hash function on said at least the two session keys.
16. A method secured communications, comprising:
   receiving a challenge from a service provider;
   using a first security protocol to generate a pseudo-secret key from the challenge; and
   using a second security protocol to generate a response to the challenge from the pseudo-secret key.
17. The method of claim 16 further comprising negotiating a temporary key with the service provider, and wherein the second security protocol is used to generate the response to the challenge from the pseudo-secret key and the temporary key.
18. The method of claim 17 wherein the temporary key is negotiated using a Diffie-Hellman key agreement protocol.
19. The method of claim 16 further comprising using the second protocol to authenticate the service provider from the challenge, the pseudo-secret key, and a token received from the service provider.
20. The method of claim 16 wherein the pseudo-secret key is generated from a preprogrammed secret key.
21. The method of claim 16 wherein the secret key is preprogrammed on a User Identity Module (UIM).
22. The method of claim 16 wherein the secret key is 64-bits and the pseudo-secret key is 128-bits.
23. The method of claim 16 further comprising using the second security protocol to generate at least one session key from the challenge and the pseudo-secret key.
24. The method of claim 23 further comprising encrypting and decrypting communications with the service provider using said at least one session key.
25. The method of claim 16 wherein the first security protocol comprises Cellular Authentication and Voice Encryption (CAVE), and the second security protocol comprises Authentication and Key Agreement (AKA).
26. The method of claim 25 further comprising negotiating a temporary key with the service provider using a Diffie-Hellman key agreement protocol, and using the AKA to generate the response to the challenge from the pseudo-secret key and the temporary key.
27. The method of claim 16 wherein the generation of the pseudo-secret key comprises using the first security protocol generate a session key from the challenge received from the network, the pseudo-secret key being generated from the session key.
28. The method of claim 27 wherein the session key comprises a key for encrypting signaling in accordance with the first security protocol.
29. The method of claim 27 wherein generation of the pseudo-secret key further comprises using the first security protocol generating a second session key from the session key and the challenge, the pseudo-secret key being generated from at least the two session keys.
30. The method of claim 29 wherein the generation of the pseudo-secret key further comprises performing a hash function on said at least the two session keys.

## Claims

1. A subscriber station, comprising:
means for receiving an encrypted sequence number;
means for receiving a message authentication code for authenticating a service provider;
means for using a decryption operation to generate a decrypted sequence number from the encrypted sequence number;
means for using a second cryptographic function to generate an expected message authentication code from the decrypted sequence number;
means for comparing the expected message authentication code with the received message authentication code for deciding whether the expected message authentication code is correct or incorrect.

2. The subscriber station of claim 1, further comprising means for deciding to abandon the authentication procedure if the expected authentication code is incorrect.

3. The subscriber station of claim 1, further comprising means for deciding to continue the authentication procedure if the expected authentication code is correct.

4. The subscriber station of claim 3, further comprising
means for locally generating a sequence number;
means for comparing the locally generated sequence number with the decrypted sequence number to verify whether the decrypted sequence number is correct or incorrect.

5. The subscriber station of claim 4, further comprising means for transmitting an error message to the service provider in case the decrypted sequence number is incorrect.

6. The subscriber station of claim 4, further comprising,
means for receiving a challenge from the service provider;
means for generating a pseudo-secret key from the challenge; and
means for generating a response to the challenge from the pseudo-secret key in case the decrypted sequence number is correct.

7. The subscriber station of claim 1, wherein the decryption operation is an XOR operation with an anonymity key.

8. The subscriber station of claim 7, further comprising
means for receiving a challenge;
means for generating a pseudo-secret key from the challenge; and
means for using a first cryptographic function to generate the anonymity key from the challenge and the pseudo-secret key.

9. The subscriber station of claim 6 wherein
the means for generating a pseudo-secret key is configured to generate the pseudo-secret key from a preprogrammed secret key.

10. The subscriber station of claim 9 further comprising a User Identity Module, UIM, and a communications processor; wherein
the UIM is configured to generate the pseudo-secret key; and
the communications processor is configured to generate the response to the challenge.

11. A subsystem in a service provider network, comprising:
means for generating a sequence number;
means for encrypting the sequence number using an encryption operation to generate an encrypted sequence number;
means for generating an authentication vector comprising the encrypted sequence number, wherein the authentication vector further comprises a message authentication code for authenticating a service provider.

12. The subsystem of claim 11, further comprising means for increasing the value of the sequence number by one and wherein the means for generating an authentication vector is adapted to generate each new authentication vector using the increased sequence number.

13. The subsystem of claim 11, wherein the encryption operation is an XOR operation with an anonymity key.

14. The subsystem of claim 13, further comprising
means for receiving a challenge;
means for generating a pseudo-secret key from the challenge; and
means for using a first cryptographic function to generate the anonymity key from the challenge and the pseudo-secret key.

15. The subsystem of claim 14 wherein the pseudo-secret key is generated from a preprogrammed secret key.

16. The subsystem of claim 15 wherein the secret key is preprogrammed on a User Identity Module (UIM).

17. The subsystem of claim 16 wherein the secret key is 64-bits and the pseudo-secret key is 128-bits.

18. A method of secured communications in a subscriber station, comprising:
receiving an encrypted sequence number;
receiving a message authentication code for authenticating a service provider;
using a decryption operation to generate a decrypted sequence number from the encrypted sequence number;
using a second cryptographic function to generate an expected message authentication code from the decrypted sequence number;
comparing the expected message authentication code with the received message authentication code for deciding whether the expected message authentication code is correct or incorrect.

19. A method of secured communications in a subscriber station which performs all the steps carried out in subscriber station claims 1 to 10 .

20. A method of secured communications in a service provider network, comprising:
generating a sequence number;
encrypting the sequence number using an encryption operation to generate an encrypted sequence number;
generating an authentication vector comprising the encrypted sequence number, wherein the authentication vector further comprises a message authentication code for authenticating a service provider.

21. A method of secured communications in a service provider network which performs all the steps carried out in subsystem claims 11 to 17.
